# FASCICULE DE BREVET EUROPEEN

(11) **EP 0 464 765 B1**
(45) Date de publication et mention de la délivrance du brevet: **21.02.1996**
(21) Numéro de dépôt: 91110938.7
(22) Date de dépôt: 02.07.1991
(51) Int. Cl.: H04B 7/204

(54) **Système spatial de télécommunications**
Weltraumnachrichtenübertragungssystem
Space telecommunications system

(30) Priorité: 03.07.1990 FR 9008394
(43) Date de publication de la demande: 08.01.1992
(73) Titulaire: ALCATEL ESPACE, F-92407 Courbevoie Cédex (FR)
(72) Inventeur: Blachier, Bruno, F-92200 Neuilly sur Seine (FR); Vidal Saint-André, Bruno, F-31400 Toulouse (FR); Renaudin, Thierry, F-92131 Issy les Moulineaux (FR)
(74) Mandataire: Weinmiller, Jürgen

(56) Documents cités:
- US-A- 4 456 988
- ANTENNAS AND PROPAGATION INTERNATIONAL SYMPOSIUM 1988, Syracuse, NY, 6-10 juin 1988, vol. II, pages 510-513, IEEE, New York, US; P. BALLING et al.: "Reconfigurable contoured beam antenna using fixed sub-beam forming networks"
- NATIONAL TELECOMMUNICATIONS CONFERENCE 1979, Washington, DC, 27-29 novembre 1979, vol. 3, pages 52.4.1 - 52.4.5, IEEE, New York, US; A.T. ALPER et al.: "Satellite system considerations for the optimum use of reconfigurable transmit
- multiple beam antennas"
- JOURNAL OF SPACECRAFT AND ROCKETS, vol. 17, no. 1, janvier-février 1980, pages 9-14, American Institute of Aeronautics and Astronautics, New York, US; D.O. REUDINK et al.: "Rapid-scan area-coverage communication satellite"

## Description

L'invention concerne un système spatial de télécommunications.

Un tel système permet d'interconnecter des utilisateurs se trouvant dans différentes zones ou traces délimitées au sol par les faisceaux des antennes réception et émission d'un satellite artificiel.

Pour réaliser ce type d'interconnexion, les méthodes connues utilisées dans le domaine spatial sont :
- le multiplexage de fréquence, dans lequel des bandes de fréquence son attribuées à chaque zone. Les stations terriennes émettent autant de porteuses que le trafic entre zones le demande. Ces porteuses doivent être démultiplexées, puis multiplexées dans le satellite pour alimenter chaque faisceau d'antenne émission.
- la méthode temporelle, dans laquelle toutes les stations sont synchronisées, de telle façon qu'une matrice de commutation hyperfréquence puisse répartir des portions de trames entre les zones.
- la commutation bord, dans laquelle les porteuses sont démodulées à bord du satellite et commutées vers les faisceaux des antennes d'émission.

De telles méthodes sont décrites notamment dans le "manuel sur les télécommunications par satellite" de l'Union internationale des télécommunications (Comité consultatif international des radiocommunications ; Genève 1985 ; voir notamment page 170 et figures 4.11 et 4.12).

Le document D1 = ANTENNAS AND PROPAGATION INTERNATIONAL SYMPOSIUM 1988, PP.510-513, par P.BALLING et al., intitulé "Reconfigurable contoured beam antenna using fixed sub-beam forming networks" divulgue un système de télécommunications ayant au moins une antenne multifaisceaux reconfigurable délimitant pour chacun des faisceaux émis et/ou reçus des zones géographiques (Zi) adjacentes ou non, ces antennes étant disposées sur un satellite. Selon l'enseignement de D1, un BFN d'antenne de satellite est constitué d'une pluralité de sous-BFN, chaque sous-BFN alimentant une partie d'une pluralité de sources élémentaires. La reconfiguration consiste à placer un interrupteur sur chaque sous-BFN, et par commutation, opérer la sélection des sous-BFN qui seront alimentés et déterminer les caractéristiques du faisceau.

Afin de minimiser la complexité de la solution proposée, D1 cherche à minimiser également la reconfigurabilité du système au stricte minimum, pour assurer la mission envisagée. La mission visée par D1 est de permettre la reconfiguration de l'antenne satellite pour tenir compte d'un éventuel changement de position orbitale.

Ce système selon D1 ne permet donc pas d'effectuer une permutation entre différentes zones géographiques. Les liaisons montantes et descendantes d'un tel satellite demeurent les mêmes, la reconfiguration ne servant qu'à assurer que le satellite sera capable de fournir le même niveau de service à partir des différentes positions orbitales.

L'intention, quant à elle, cherche à procurer une plus grande souplesse en ce qui concerne les configurations possibles pour relier des liaisons montantes et des liaisons descendantes, afin de connecter différentes zones géographiques.

Le document D3 = Journal of Spacecraft and Rockets, vol.17, no.1,(1980), pp.9-14, par D.O. Reudink et al., intitulé : "Rapid-scan Area-coverage Communication Satellite, enseigne l'utilisation d'une antenne reconfigurable à bord d'un satellite pour effectuer un balayage rapide d'un faisceau fin pour couvrir une grande surface au sol, par exemple les Etats Unis. Selon l'enseignement de ce document, le faisceau sera orienté vers une station au sol à un moment donné qui correspond à son tour dans un système AMRT (Accès Multiple à Répartition Temporelle). Chaque station se voit attribuer une fenêtre temporelle périodique pour effectuer ses communications avec le satellite, et le faisceau du satellite sera dirigé vers ladite station pendant ladite fenêtre.

Un tel système présente déjà une amélioration par rapport à l'art antérieur, de par ses gains importants sur l'énergie totale qui doit émise par le satellite. L'utilisation d'un faisceau fin, orienté vers la station appropriée, permet d'économiser l'énergie qui serait gaspillé par l'arrosage uniforme du territoire des Etats-Unis.

Cependant, un tel système devient vite ingérable si le nombre de stations au sol devient important. Par exemple, pour l'utilisation d'un tel système avec une centaine de stations au sol, un contrôleur doit mémoriser une matrice de 10⁴ éléments qui désignent le nombre de canaux de communication qui seront utilisés entre chaque paire de stations. Ensuite une fenêtre temporelle est attribuée à chaque paire de stations en fonction de la demande (nombre de canaux de communication, déterminé par le débit de communications attendu). Le satellite doit ensuite synthétiser, tour à tour, les cent faisceaux montants, chacun pour le temps alloué dans la fenêtre temporelle consignée en mémoire. Enfin, le satellite doit former les cent faisceaux descendants, l'un après l'autre, selon le tableau de 10⁴ éléments en mémoire (voir p. 10. col.2, lignes 15 et suivantes.)

Document D2 = IEEE National Telecommunciations Conference Record (1979), Washington D.C., de A.T. ALPER, intitulé "Satellite system considerations for the optimum use of reconfigurable transmit multiple beam antennas", enseigne l'utilisation de faisceaux multiples en émission pour des zones géographiques adjacentes ou non. Contrairement à l'enseignement de D3, la connectivité entre les stations terriennes du système est assurée en utilisant des porteuses AMRF (accès multiple en répartition de fréquences) ou AMRC (accès multiple en répartition de codes) en destination(s) unique ou multiple. Ni la commutation de faisceaux ni leur évolution temporelle ne sont adressées par ce document, qui concerne beaucoup plus les questions de signal sur bruit près de la saturation de trafic.

Les inconvénients de ces différentes méthodes sont les suivants :
- dans un multiplexage de fréquence, indépendamment de la difficulté pour les stations terriennes d'émettre autant de porteuses que de zones avec lesquelles elles veulent établir des communications, le dispositif de multiplexage à bord du satellite est complexe et manque de souplesse (exemple INMARSAT III).
- la méthode temporelle nécessite l'emploi d'une matrice de commutation hyperfréquence qui est compliquée et devient pratiquement irréalisable si le nombre de zones est grand.
- la commutation bord nécessite une démodulation bord, ce qui, en cas de nombreuses porteuses, devient vite irréalisable.

L'invention a pour objet de pallier ces inconvénients.
A ces fins, la présente invention a pour objet un système spatial de télécommunications, comportant au moins une antenne émission (10) et une antenne réception (11), au moins l'une de ces antennes étant multifaisceaux et reconfigurable, délimitant pour chacun des faisceaux émis et/ou reçus des zones géographiques (Zi) adjacentes ou non, ces antennes étant disposées sur un satellite (12);
**caractérisé en ce que** ladite au moins une antenne multifaisceaux reconfigurable réalise une permutation desdites zones géographiques délimitées (Zi) par reconfiguration et qu'il comprend en outre une pluralité de circuits BFN variables reliés à ladite au moins une antenne multifaisceaux reconfigurable, et ladite permutation est obtenue par une reconfiguration desdits circuits BFN dont on permute les lois de phase et/ou d'amplitude.

Selon un mode de réalisation préférée, ladite permutation est cyclique. Selon une autre caractéristique, ladite antenne réception est une antenne à réflecteur. Selon une autre caractéristique, ladite antenne émission est une antenne réseau.

Un tel système permet d'améliorer la méthode temporelle en supprimant la matrice de commutation hyperfréquence et en utilisant une antenne émission (ou réception) reconfigurable du type réseau possédant des circuits BFN ("beam forming networks") variables associés à une antenne réception (ou émission) fixe. Cette antenne réception (ou émission) possède plusieurs faisceaux fins correspondant à différentes zones géographiques Z1, Z2.... Zx. L'antenne émission (ou réception) possède également x faisceaux fins correspondant aux zones géographiques Z1, Z2... Zx , mais grâce aux circuits BFN variables, les faisceaux se déplacent entre les zones, permutant cycliquement leurs positions entre eux.

Avantageusement un tel système est suffisamment souple pour pouvoir s'adapter à des besoins non connus à l'heure actuelle.

Les caractéristiques et avantages de l'invention ressortiront d'ailleurs de la description qui va suivre, à titre d'exemple non limitatif, en référence aux figures annexées sur lesquelles :

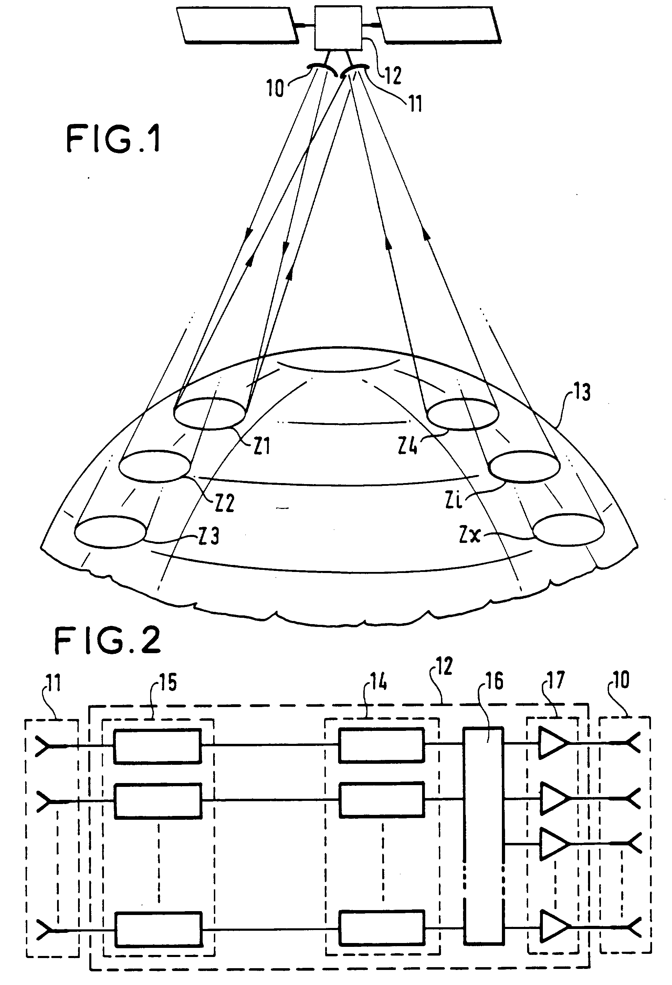

- les figures 1 et 2 illustrent le système de l'invention.

L'invention concerne un système permettant la gestion des commandes d'antennes 10 et 11 à plusieurs faisceaux et de grand gain équipant un satellite de télécommunications 12. Ce système permet de faire communiquer entre eux des stations terriennes appartenant à des zones géographiques différentes existant dans la couverture globale d'un satellite. Ces zones géographiques correspondent aux empreintes sur la terre 13 des différents faisceaux, représentées sur la figure 1, qui sont référencés Z1, Z2... Zx. Ce système permet de faire communiquer entre elles les stations terriennes appartenant aux zones Z1, Z2... Zx, en respectant une matrice de trafic existant entre ces zones Zi. Il permet également une telle interconnexion et la reconfiguration de celles-ci correspondant à la fluctuation du trafic.

Sur la figure 1 le satellite artificiel de télécommunication 12, travaillant en répéteur, est équipé de deux antennes multifaisceaux 10 et 11 délimitant, pour chaque faisceau des zones géographiques adjacentes ou non ; chacune de ces zones étant ainsi couverte par un faisceau de l'antenne émission 10 et de l'antenne réception 11.

Selon l'invention l'une des antennes est reconfigurable : Elle permet ainsi de permuter les faisceaux disponibles derrière chaque accès, une émission reçue de la zone Z1 peut alors être réacheminée vers la zone Z2 puis la zone Z3... puis la zone Zx. On obtient par permutation une interconnexion de toutes les zones entre elles.

Ainsi, en fin de cycle, toutes les zones ont été interconnectées au moyen d'une discrimination spatiale du faisceau porteur de l'information.

Le chemin de l'information à bord du satellite 12 est représenté sur la figure 2. Dans cet exemple on utilise une antenne à réflecteur 11 fixe à la réception, une antenne réseau 10 variable à l'émission. Mais ces rôles peuvent être inversés.

Des circuits 14 ("Beam forming network" ou réseaux de formation de faisceaux) sont reliés à travers les circuits de réception 15 à l'antenne de réception 11 d'une manière fixe et invariable. Ces circuits BFN 14 sont reliés à travers des répartiteurs 16 et des amplificateurs de puissance 17 à l'antenne émission 10.

A l'instant to initial, l'antenne émission a ses circuits BFN réglés de telle sorte que le circuit BFN 1 oriente son faisceau sur la zone Z1, le circuit BFN 2 oriente son faisceau sur la zone Z2. Le circuit BFN x sur la zone Zx. Ces circuits restent orientés dans cette position pendant un temps Δ T1.

A l'instant to + Δ T1, il y a un nouveau réglage de ces circuits BFN de telle sorte que le circuit BFN 1 oriente son faisceau sur la zone Z2, le circuit BFN 2 sur la zone Z3.... le BFN x sur la zone Z1. Ce nouveau réglage se maintient pendant la durée Δ T2, etc...

A l'instant to + Δ T1 + Δ T2 +..... + Δ Tx le réglage des circuits BFN revient au réglage initial au temps to.

Dans le tableau, donné en fin de description, est représentée cette permutation des faisceaux.

Toutes les zones Z sont donc successivement mises en communications, deux à deux pour permettre l'interconnexion complète des x zones entre elles.

Bien évidemment, la séquence des différents réglages des circuits BFN (lois de phase et/ou amplitude) doit être optimisée pour offrir le plus de trafic possible. En particulier si deux zones Zp et Zq n'ont pas d'autre trafic que le trafic entre elles, il n'est pas nécessaire de faire varier les circuits BFNp et les circuits BFNq qui sont programmés pour que les faisceaux soient orientés sur les zones Zp et Zq d'une manière constante. Par contre, les autres circuits BFN varient cycliquement selon le besoin du trafic.

Les stations terriennes de la zone Z1 pendant le temps to à to + Δ T1 communiquent entre elles. Pendant le temps to + Δ T1 à to + Δ T1 + Δ T2, les stations de la zone Z1 transmettent vers les stations de la zone Z2.

Les stations terriennes émettent en permanence, mais vers des zones différentes cycliquement. Si plusieurs stations d'une même zone, par exemple de la zone Z1, ont les mêmes relations avec d'autres zones, par exemple les zones Z2 et Z3, des porteuses différentes doivent être attribuées à chaque station, mais une répartition temporelle peut également exister entre les stations de la zone Z1 et dans ce cas, l'émission des stations est discontinue.

Les stations terriennes et le satellite sont donc en synchronisme puisque l'information allant d'une zone Zp à une zone Zq doit arriver dans le satellite à un moment bien défini dans la trame. Ces stations situées dans les différentes zones reçoivent par avance, par une liaison séparée, les informations concernant l'ordre des commutations et un top de synchronisation. De même à la réception, la référence dans la trame donne la zone d'où provient l'information.

D'autre part, l'optimisation de la trame, c'est-à-dire des temps Δ T1, Δ T2... Δ Tx, est à réaliser en tenant compte de la matrice des quantités d'informations à transmettre de zone à zone. Moyennant des modifications mineures, des algorithmes appropriés, déjà étudiés pour les matrices de commutation hyperfréquence, peuvent être utilisés.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

Dans une variante de réalisation l'antenne réception 11 peut être reconfigurable et l'antenne émission 10 fixe.

Le système de l'invention permet de combiner les différentes méthodes d'interconnexion : spatiale, temporelle et fréquencielle.

| | Circuit BFN1 | Circuit BFN2 | Circuit BFN3 | --------------- | Circuit BFNx |
|---|---|---|---|---|---|
| de to à to+ ΔT1 | Z1 | Z2 | Z3 | ------- | Zx |
| to+ ΔT1 à to+ ΔT1 + ΔT2 | Z2 | Z3 | Z4 | | Z1 |
| to+ ΔT1 + ΔT2 à to + ΔT1+ ΔT2+ ΔT3 | Z3 | Z4 | Z5 | ------- | Z2 |

| \| | \| | \| | \| | | \| |
|---|---|---|---|---|---|
| to+ ΔT1...+ ΔTx-1 à to+ ΔT1+...+ ΔTx | Zx | Z1 | Z2 | | Zx-1 |
| to+ ΔT1+ ΔT2...ΔTx à to+ ΔT1+ ΔT2... ΔTx + ΔT1 | Z1 | Z2 | Z3 | | Zx |

## Revendications

1. Système spatial de télécommunications, comportant au moins une antenne émission (10) et une antenne réception (11), au moins l'une de ces antennes étant multifaisceaux et reconfigurable, délimitant pour chacun des faisceaux émis et/ou reçus des zones géographiques (Zi) adjacentes ou non, ces antennes étant disposées sur un satellite (12);
**caractérisé en ce que** ladite au moins une antenne multifaisceaux reconfigurable réalise une permutation desdites zones géographiques délimitées (Zi) par reconfiguration et qu'il comprend une pluralité de circuits BFN variables reliés à ladite au moins une antenne multifaisceaux reconfigurable, et en ce que ladite permutation est obtenue par une reconfiguration desdits circuits BFN dont on permute les lois de phase et/ou d'amplitude.

2. Système selon la revendication 1, **caractérisé en ce que** ladite permutation est cyclique.

3. Système selon l'une quelconque des revendications précédentes, **caractérisé en ce que** ladite antenne réception (11) est une antenne à réflecteur.

4. Système selon l'une quelconque des revendications précédentes, **caractérisé en ce que** ladite antenne émission (12) est une antenne réseau.

## Patentansprüche

1. Satelliten-Nachrichtensystem mit mindestens einer Sendeantenne (10) und einer Empfangsantenne (11), wobei mindestens eine dieser Antennen mehrere Strahlen ausbildet und neu konfigurierbar ist, wobei jeder dieser ausgesendeten und/oder empfangenen Strahlen auf benachbarte oder nicht benachbarte geographische Zonen (Zi) trifft und wobei diese Antennen auf einem Satelliten (12) montiert sind, dadurch gekennzeichnet, daß die mindestens eine neu konfigurierbare Antenne mit mehreren Strahlen eine Permutation dieser geographischen zonen (Zi) durch Neukonfiguration durchführt und daß das System zahlreiche variable BFN-Schaltungen besitzt, die an die mindestens eine neu konfigurierbare Antenne mit mehreren Strahlen angeschlossen sind, und daß die Permutation durch eine Neukonfigurierung der BFN-Schaltungen erhalten wird, deren Phasen- und/oder Amplitudengesetze permutiert werden.

2. System nach Anspruch 1, dadurch gekennzeichnet, daß die Permutation zyklisch ist.

3. System nach einem beliebigen der vorhergehenden Ansprüche, dadurch gekennzeichnet, daß die Empfangsantenne (11) eine Reflektorantenne ist.

4. System nach einem beliebigen der vorhergehenden Ansprüche, dadurch gekennzeichnet, daß die Sendeantenne (12) eine Netzantenne ist.

## Claims

1. A space telecommunications system including at least one transmit antenna (10) and one receive antenna (11), at least one of these antennas being a multiple beam reconfigurable antenna, delimiting for each of the transmit and/or receive beams adjacent or non-adjacent geographical zones (Zi), these antennas being disposed on a satellite (12); characterised in that said at least one reconfigurable multiple beam antenna permutates said delimited geographical areas (Zi) by reconfiguration and in that it further includes a plurality of variable BFN circuits connected to said at least one reconfigurable multiple beam antenna and said permutation is achieved by reconfiguration of said BFN circuits the phase and/or amplitude laws of which are permutated.

2. System according to claim 1 characterised in that said permutation is cyclic.

3. System according to claim 1 or claim 2 characterised in that said receive antenna (11) is a reflector antenna.

4. System according to any one of the preceding claims characterised in that said transmit antenna (12) is an array antenna.
